# EUROPÄISCHE PATENTSCHRIFT

(11) **EP 1 719 329 B1**
(45) Veröffentlichungstag und Bekanntmachung des Hinweises auf die Patenterteilung: **19.09.2007**
(21) Anmeldenummer: 05776202.3
(22) Anmeldetag: 26.07.2005
(51) Int. Cl.: H04L 29/06

(54) **VERFAHREN ZUM ÜBERTRAGEN VON TELEKOMMUNIKATIONSDATEN VON EINEM ZUGANGSNETZWERK ZU EINEM MEDIA GATEWAY CONTROLLER**
METHOD FOR TRANSMITTING TELECOMMUNICATIONS DATA FROM AN ACCESS NETWORK TO A MEDIA GATEWAY CONTROLLER
PROCEDE POUR TRANSMETTRE DES DONNEES DE TELECOMMUNICATION D'UN RESEAU D'ENTREE A UN CONTROLEUR DE PASSERELLE DE MEDIA

(30) Priorität: 09.09.2004 DE 102004043572
(43) Veröffentlichungstag der Anmeldung: 08.11.2006
(73) Patentinhaber: NOKIA SIEMENS NETWORKS GMBH & CO. KG, 81541 München (DE)
(72) Erfinder: SCHMIDTKE, Uwe, 17493 Greifswald (DE)
(74) Vertreter: Kley, Hansjörg
(86) Internationale Anmeldenummer: PCT/EP2005/008096
(87) Internationale Veröffentlichungsnummer: WO 2006/027050

(56) Entgegenhaltungen:
- WEILANDT N KHANCHANDANI S RAO NORTEL NETWORKS E: "V5.2-User Adaptation Layer (V5UA)" IETF STANDARD, INTERNET ENGINEERING TASK FORCE, IETF, CH, Juni 2004 (2004-06), XP015009585 ISSN: 0000-0003 in der Anmeldung erwähnt
- BOCKER P: "ISDN, DAS DIENSTEINTEGRIERENDE DIGITALE NACHRICHTENNETZ" ISDN DIENSTEINTEGRIERENDE DIGITALE NACHRICHTENNETZ. KONZEPTE, VERFAHREN, SYSTEME, BERLIN, SPRINGER VERLAG, DE, 1986, Seiten 56-119, XP002016063 in der Anmeldung erwähnt

## Beschreibung

Die Erfindung bezieht sich auf ein Verfahren zum Übertragen von Telekommunikationsdaten von einem Zugangsnetzwerk zum einem Media Gateway Controller gemäss dem Oberbegriff des Patentanspruches 1.

In Telekommunikationsnetzwerken findet zunehmend eine Konvergenz bei der Übermittlung von Sprache und Daten statt. Sehr verbreitet werden dabei für die Übertragungsstrecke zwischen einem Teilnehmerendgerät und einem Zugangsnetzwerk sowohl im Sprach- wie im Datenverkehr zeitmultiplexorientierte Übertragungsverfahren genutzt. Beispielhaft seien die Verfahren ISDN und V5.2 genannt. Diese Daten (Sprache wie Daten) werden dann über Ethernet-basierenden Übertragungsverfahren, beispielsweise nach dem Internet Protocol (IP), zum eigentlichen Backbone transportiert und von dort zum gewünschten Teilnehmeranschluss weitergeleitet.

Die im Zeitmultiplex-Verfahren übertragenen Daten beinhalten in verschiedenen Schichten, in sogenannten Layers, unterschiedliche Daten, um neben der Übermittlung der Nutzdaten auch die gesamten Randbedingungen der Kommunikation hinsichtlich der unterschiedlichen Dienste, Funktionen und Protokolle zu steuern. Diese Funktionen und Protokolle lassen sich entsprechend der hierarchischen Struktur der sieben Schichten des OSI-Referenzmodells gliedern. Die Protokolle der Schichten 1 bis 4 sind dabei transportorientiert, die Protokolle der Schichten 5 bis 7 sind demgegenüber anwendungsorientierte Protokolle. Wegen weiterer Einzelheiten wird hierzu auf "Peter Bocker: ISDN - das diensteintegrierende digitale Nachrichtennetz, ISBN 3-540-51894-0" verwiesen.

Bei der Verwendung einer TDM Schnittstelle zwischen einem Anschlussnetzwerk und einem Signalling Gateway und einer nachfolgenden IP Schnittstelle zwischen dem Signalling Gateway und einem Media Gateway Controller werden die gesamten Layer 3 Daten, beispielsweise einer V5.2 Schnittstelle, im IP Netzwerk übertragen und im Media Gateway Controller terminiert. Diese Lösung wird im Internet-Draft V5.2-User Adaptations Layer (V5UA) beschrieben, welcher den Mechanismus zur Übertragung (Backhauling) von V5.2 Messages über IP unter Benutzung des Stream Control Transmission Protocol (SCTP) beschreibt. Dieses Dokument wiederum basiert auf dem "Internet standards track protocol for the Internet community"RFC 3057 ISDN Q.921-User Adaptation Layer (Datalink Layer Specification).

Bei dieser vorstehend beschriebenen Lösung tritt im IP Netz neben der durch die Traffic-relevanten Daten hervorgerufenen Belastung eine zusätzliche Belastung durch die Übertragung von Nachrichten auf, welche nicht Traffic-relevant sind, sondern nur allgemeine Funktionen des TDM Interfaces abdecken. Eine nicht vernachlässigbare Anzahl der Funktionen des TDM-Interfaces werden daher über das IP Netz verteilt, was zu einer zusätzlichen Belastung des IP Netzes führt.

Aus diesem Grund liegt der vorliegenden Erfindung die Aufgabe zugrunde, einen Weg zu weisen, wie diese Netzbelastung auf der IP Seite reduziert werden kann.

Diese Aufgabe wird erfindungsgemäss mit einem Verfahren zum Übertragen von Telekommunikationsdaten von einem Zugangsnetzwerk zum einem Media Gateway Controller, wobei zwischen dem Zugangsnetzwerk und einem Signalling Gateway eine TDM-Schnittstelle und zwischen dem Signalling Gateway und dem Media Gateway Controller eine IP-Schnittstelle realisiert sind, gelöst, bei dem Teile der Telekommunikationsdaten, die für allgemeine, nicht unmittelbar Traffic-relevante Funktionen der TDM-Schnittstelle als Layer 3 Daten im Uplink-Verkehr übertragen werden, im Signalling Gateway terminiert werden.

Auf diese Weise entfallen die Nachrichten für allgemeine Funktionen der TDM Schnittstelle auf der IP-Seite. Besonders effizient werden dabei Port Control Nachrichten im IP Netz nur im Accelerated Port Alignment Mode betrieben, d.h. es werden nur noch Daten für ein Port-Gruppen-Freischaltverfahren übertragen (beispielsweise nach V5.2 amendment A1).

In vorteilhafter Ausgestaltung können die Nachrichten, welche auf der IP-Seite eingespart werden, zu den allgemeinen, nicht unmittelbar Traffic-relevanten Funktion Bearer Channel Control Funktion, Protection Funktion, CTAL-Control Funktion und Link Control Funktion gehören. Dabei sind die Bearer Channel Control (BCC)-Nachrichten für die Zuweisung von Zeitslots für die eigentlichen Nutzdaten (payload) der TDM Schnittstelle vorgesehen. Die Protection Funktion bewirkt eine Redundanzumschaltung im Fehlerfall und verknüpft die physikalischen und die logischen Kommunikationskanäle der TDM Schnittstelle. Die CTAL-Control Funktion umfasst zwei Teilaufgaben. Zum einen wird mit dieser Funktion der Common Control der PSTN-Schnittstelle (PSTN: Public Switched Telecommunication Network) ausgeführt, d.h. die Teilnehmerschnittstellen werden hiermit gestartet oder rückgesetzt (gilt auch für analoge Anschlüsse). Zum anderen werden mit dieser Funktion die Single Port Alignment Protocole ausgeführt, die für jeden Port das separate Andock- und Freischaltverfahren steuern. Es sei angemerkt, dass wie weiter oben stehend bereits erwähnt, die Nachrichten nach dem Accelerated Port Alignment zum Media Gateway Controller durchgeschaltet werden und nicht im Signalling Gateway terminiert werden. Mit der oben zuletzt genannten Funktion des Link Controls wird tatsächlich die Kontrollfunktion über die Teilnehmerschleife durchsignalisiert, also wie zum Beispiel die Steuerung der Freischaltung und der Link Check. Als Link Control Daten werden daher nur solche Daten durchsignalisiert, welche als Informationen für den abschliessenden Zustand der TDM-Links als B-Kanal-Ressource notwendig sind.

In vorteilhafter Ausgestaltung der vorliegenden Erfindung kann es vorgesehen sein, die Information über eine Verschaltung von Netzwerkressourcen zwischen dem Signalling Gateway und dem Media Gateway Controller über eine H.248 Schnittstelle zu übertragen. Auf diese Weise wird der notwendige Abschluss der TDM Schnittstelle bereits für die H.248 Anwendung im Signalling Gateway implementiert. Auf diese Weise kann dann zum Beispiel eine Implementierung von V5-Funktionen im Media Gateway Controller mit einem wesentlich geringeren Aufwand realisiert werden.

In weiterer vorteilhafter Ausgestaltung der Erfindung kann mittels des Abschlusses der TDM-Schnittstelle im Signalling Gateway ein Single Port Alignment in Richtung zum Zugangsnetzwerk unterstützt werden. Auf diese Weise ist es möglich, auch ältere Zugangsnetzwerke mittels beispielsweise V5UA zu migrieren, d.h. also auch solche Zugangsnetzwerke zu unterstützen, die noch kein Accelerate Port Alignment unterstützen.

Aufgrund der existierenden Standardisierung und aufgrund der sich entwickelnden Verbreitung von V5-Netzwerken, ist es vorteilhaft als TDM-Schnittstelle eine V5.2 Schnittstelle zu implementieren.

Weitere vorteilhafte Ausgestaltungen der Erfindung sind den übrigen Unteransprüchen zu entnehmen.

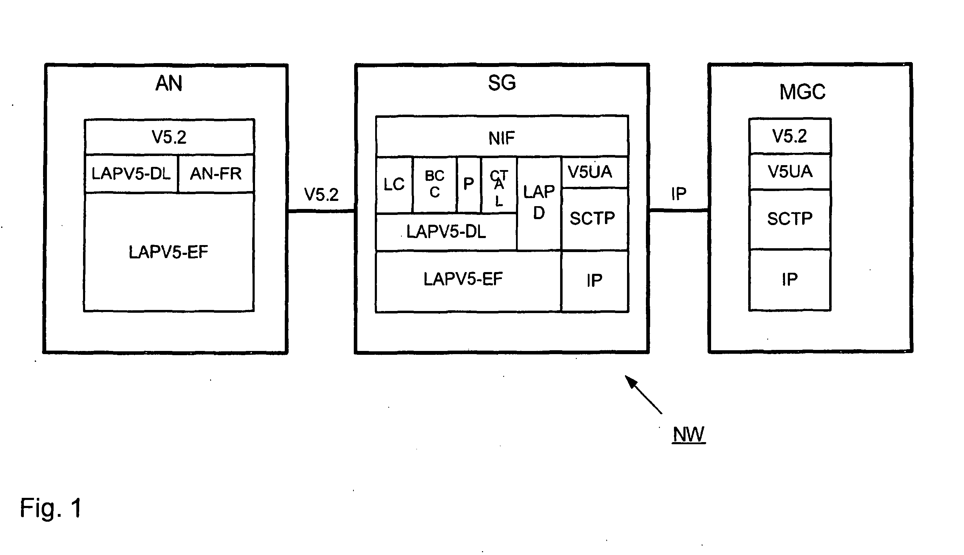

Ausführungsbeispiele der Erfindung werden anhand einer Zeichnung näher erläutert. Dabei zeigt die Figur 1 eine schematische Darstellung eines nach dem erfindungsgemässen Verfahrens arbeitenden Telekommunikationsnetzwerkes, nachfolgend kurz als Netzwerk NW bezeichnet. Dieses Netzwerk NW umfasst ein zu einer hier nicht weiter dargestellten Teilnehmerseite orientiertes Zugangsnetzwerk, nachfolgend als Access Network AN bezeichnet, einen Signalisierungsknoten, nachfolgend als Signalling Gateway SG bezeichnet und einen Kontroller für den Signalisierungsknoten, nachfolgend als Media Gateway Controller MGC bezeichnet.

Zwischen dem Access Network AN und dem Signalling Gateway befindet sich eine V5.2 Schnittstelle, die einen Datentransfer nach dem V5.2 User Adaptation Layer (V5UA) ermöglicht. Zwischen dem Signalling Gateway SG und dem Media Gateway Controller MGC ist ein Interface nach Internet Protocol IP eingerichtet, welches den Datentransfer von V5.2 Daten über IP nach dem Stream Control Transmission Protocol SCTP ermöglicht und auf dem "Internet Standards track protocol for the Internet community" RFC 3057 ISDN Q.921-User Adaptation Layer beruht.

Das Access Network AN umfasst daher im Rahmen der V5.2 Funktion die Funktionalitäten LAPV5-DL, AN-FR und LAPV5-EF. LAPD heißt "Link Access Procedure on the D-channel" d.h. layer 2 data link entsprechend Q.921. LAPV5 basiert auf LAPD und ist der vereinfachte layer 2 data link für die V5 Schnittstelle. LAPV5-DL steht daher für "Link Access Procedure nach V5 für den D-channel link", d.h für den Layer 2 Datenlink entsprechend Q.921 (ISDN layer 2 link). LAPV5-EF entsprechend steht für das Ethernet-Framing für die E1-Dateninterfaces auf der V5.2 Schnittstelle. AN-FR ist die Funktionalität des Access Network Frame Relay.

Mit dem Übergang zum Signalling Gateway SG wird zugleich auch die TDM-Welt abgeschlossen (TDM = Time division multiplexing), also beispielsweise die V5- oder ISDN-Welt. Das Signalling Gateway SG stellt sämtlich an dieser Stelle erforderlichen Zwischenknotenfunktionalitäten bereit, nachfolgend als Nodal Interworking Function NIF bezeichnet. Als besonderes Merkmal der hier beispielhaft beschriebenen Erfindung werden in dem Signalling Gateway SG die Layer 3 Daten der V5.2 Schnittstelle terminiert. Hierfür sind in der Figur die Funktionen Link Control LC, Bearer Channel Control BCC, Protection P und Common-and Port Control CTAL eingetragen.

Diese Nachrichten, welche auf der IP-Seite eingespart werden, gehören zu den allgemeinen, nicht unmittelbar Traffic-relevanten Funktionen der V5.2 Schnittstelle. Dabei sind die Bearer Channel Control (BCC)-Nachrichten für die Zuweisung von Zeitslots für die eigentlichen Nutzdaten (payload) der V5.2 Schnittstelle vorgesehen. Die Protection (P) Funktion bewirkt eine Redundanzumschaltung im Fehlerfall und verknüpft die physikalischen und die logischen Kommunikationskanäle der V5.2 Schnittstelle. Die CTAL-Control Funktion umfasst zwei Teilaufgaben. Zum einen wird mit dieser Funktion der Common Control der PSTN-Schnittstelle (PSTN: Public Switched Telecommunication Network) ausgeführt, d.h. die Teilnehmerschnittstellen werden hiermit gestartet oder rückgesetzt (gilt auch für analoge Anschlüsse). Zum anderen wird mit dieser Funktion das Single Port Alignment Protocol ausgeführt, die für jeden Port das separate Andock- und Freischaltverfahren steuert. Es sei angemerkt, dass die Nachrichten nach dem Accelerated Port Alignment zum Media Gateway Controller MGC durchgeschaltet werden und nicht im Signalling Gateway SG terminiert werden. Mit der oben zuletzt genannten Funktion des Link Controls LC wird tatsächlich die Kontrollfunktion über die Teilnehmerschleife durchsignalisiert, also wie zum Beispiel die Steuerung der Freischaltung und der Link Checks. Als Link Control Daten werden daher nur solche Daten durchsignalisiert, welche als Informationen für den abschliessenden Zustand der V5.2-Links als B-Kanal-Ressource notwendig sind.

Auf diese Weise wird die Belastung des IP-Netzes signifikant verringert. Bezüglich der Single Port Alignment Nachrichten (im CTAL) wurden bisher für jeden Port bei einem Aufstarten der V5.2 Schnittstelle mindestens vier Nachrichten übertragen, was bei rund 4000 Teilnehmerendstellen eine Nachrichtenflut von 16.000 Nachrichten darstellt, die nun durch nur noch vier Nachrichten ersetzt werden. Der Grund hierfür ist die Terminierung der Single Port Alignment Nachrichten im Signalling Gateway SG. Die vier noch an den Media Gateway Controller durchgeschalteten Nachrichten werden nach dem Accelerated Port Alignment gemäss V5.2 Amendment A1 oder Second Edition übertragen.

Bezüglich der Bearer Channel Control Nachrichten BCC können pro Anruf vier Nachrichten eingespart werden. Das entspricht rund einem Viertel der anruf-abhängigen Netzbelastung, welche nun auf dem IP-Netz eingespart wird. Die Bearer Channel Control Nachrichten BCC können dabei entfallen, weil die Information über die Zuordnung von Zeitschlitzen für die eigentliche Payload der V5.2 Schnittstellen im IP-Netz gleichzeitig über die H.248 Schnittstelle (MEGACO) übertragen wird. Die übliche Zuordnung über Bearer Channel Control Nachrichten kann auf diese Weise auf der V5.2 Schnittstelle vom Signalling Gateway SG zur Steuerung der E1 Schnittstellen abgeleitet werden.

Bezüglich der Link Control Nachrichten LC wurden bei jedem V5.2 startup und jedem Link-Zustandswechsel je Link durchschnittlich 12 Nachrichten ausgetauscht. Damit wurden allein bei jedem V5.2 startup bei einer Anzahl von typischerweise 16 Link-Interfaces 192 Nachrichten auf der IP Seite transportiert. Diese Nachrichten entfallen nun vollständig.

Hinsichtlich der Protection Nachrichten P werden nun mehr rund vier bis sechs Nachrichten bei jeder Redundanzumschaltung auf dem IP Netz vermieden. Diese Vermeidung dieser Protection Nachrichten P wirkt sich dann besonders aus, wenn bei oszilierenden Störungen auf der V5.2 Schnittstelle, z.B. bei einem oszillierenden Layer 1 Zustand mit ständigen Umschaltversuchen, die hierdurch hervorgerufene Nachrichtenflut der Redundanzumschaltversuche nicht mehr im IP Netz übertragen werden muss.

Es ergibt sich auf diese Weise auch eine höhere Betriebssicherheit für die V5.2 Schnittstelle und das Netzwerk NW, weil eben diese vitalen Funktionen der V5.2 Schnittstelle nicht über das gesamte IP Netz verteilt werden müssen, sondern eben schon im Signalling Gateway SG terminiert sind. So gehören beispielsweise zu einer V5.2 Schnittstelle mit 16 Link Interfaces und einem Konzentrationsfaktor von 8 rund 4000 Teilnehmeranschlüsse. Störungen bei den vitalen Protokollen, wie Common Control CTAL, Link Control LC oder Protection P können zum Ausfall des gesamten Interfaces führen und damit zum gleichzeitigen Ausfall aller Teilnehmer. Durch die Terminierung dieser Nachrichten bereits im Signalling Gateway wird eine weitaus grössere Sicherheit erreicht, weil diese Nachrichten nun mehr nicht mehr auf der IP Seite übertragen werden.

### Liste der verwendeten Bezugszeichen und Abkürzungen

- AN: Zugangsnetzwerk, Access Network
- AN-FR: Access Network Frame Relay
- BCC: Bearer Channel Control
- CTAL: Common-and Port Control
- IP: Internet Protocol
- LAPD: Link Access Procedure on the D-channel
- LAPV5-DL: Link Access Procedure V5 D-channel link
- LAPV5-EF: Link Access Procedure V5 Ethernet-Framing
- LC: Link Control
- MGC: Media Gateway Controller
- NIF: Nodal Interworking Function
- NW: Netzwerk
- P: Protection Funktion
- SCTP: Stream Control Transmission Protocol
- SG: Signalling Gateway
- TDM: time division multiplexing
- V5UA: V5.2 User Adaptation Layer

## Patentansprüche

1. Verfahren zum Übertragen von Telekommunikationsdaten von einem Zugangsnetzwerk (AN) zum einem Media Gateway Controller (MGC), bei dem zwischen dem Zugangsnetzwerk (AN) und einem Signalling Gateway (SG) eine TDM-Schnittstelle (V5.2) und zwischen dem Signalling Gateway (SG) und dem Media Gateway Controller (MGC) eine IP-Schnittstelle (IP) realisiert sind,
**dadurch gekennzeichnet, dass**
Teile der Telekommunikationsdaten, die für allgemeine, nicht unmittelbar Traffic-relevante Funktionen der TDM-Schnittstelle (V5.2) als Layer 3 Daten im Uplink-Verkehr übertragen werden, im Signalling Gateway (SG) terminiert werden.

2. Verfahren nach Anspruch 1,
**dadurch gekennzeichnet, dass**
die allgemeinen, nicht unmittelbar Traffic-relevanten Funktion eine Bearer Control Funktion (BCC), eine Protection Funktion (P), eine CTAL-Controll Funktion (CTAL) und eine Link Controll Funktion (LC) sind.

3. Verfahren nach Anspruch 1 oder 2,
**dadurch gekennzeichnet, dass**
die Information über eine Verschaltung von Netzwerkressourcen zwischen dem Signalling Gateway (SG) und dem Media Gateway Controller (MGC) über eine H.248 Schnittstelle übertragen werden.

4. Verfahren nach einem der Ansprüche 1 bis 3,
**dadurch gekennzeichnet, dass**
mittels des Abschlusses der TDM-Schnittstelle (V5.2) im Signalling Gateway (SG) ein Single Port Alignment in Richtung zum Zugangsnetzwerk (AN) unterstützt wird.

5. Verfahren nach einem der Ansprüche 1 bis 4,
**dadurch gekennzeichnet, dass**
als TDM-Schnittstelle eine V5.2 Schnittstelle (V5.2) implementiert wird.

## Claims

1. Method for transmitting telecommunications data from an access network (AN) to a media gateway controller (MGC), wherein a TDM interface (V5.2) is implemented between the access network (AN) and a signalling gateway (SG) and an IP interface (IP) is implemented between the signalling gateway (SG) and the media gateway controller (MGC),
**characterised in that**
parts of the telecommunications data which are transmitted as layer 3 data in the uplink traffic for general, not directly traffic-relevant functions of the TDM interface (V5.2) are terminated in the signalling gateway (SG).

2. Method according to claim 1,
**characterised in that**
the general, not directly traffic-relevant functions are a bearer control function (BCC), a protection function (P), a CTAL control function (CTAL) and a link control function (LC).

3. Method according to claim 1 or 2,
**characterised in that**
the information relating to an interconnection of network resources between the signalling gateway (SG) and the media gateway controller (MGC) is transmitted via an H.248 interface.

4. Method according to one of claims 1 to 3,
**characterised in that**
a single port alignment in the direction of the access network (AN) is supported by means of the termination of the TDM interface (V5.2) in the signalling gateway (SG).

5. Method according to one of claims 1 to 4,
**characterised in that**
a V5.2 interface (V5.2) is implemented as the TDM interface.

## Revendications

1. Procédé de transmission de données de télécommunication d'un réseau (AN) d'accès à un Media Gateway Controller (MGC), dans lequel on réalise entre le réseau (AN) d'accès et un Signalling Gateway (SG) d'une interface TDM (V5.2) et entre le Signalling Gateway (SG) et le Media Gateway Controller (MGC) une interface IP (IP)
**caractérisé en ce que**
des parties de données de télécommunication, qui sont transmises pour des fonctions générales non directement pertinentes pour le trafic de l'interface TDM (V5.2) en tant que données de couche 3 dans le trafic Upling, sont terminées dans le Signalling Gateway (SG).

2. Procédé suivant la revendication 1
**caractérisé en ce que**
les fonctions générales non pertinentes pour le trafic sont une fonction Bearer Controll (BCC) une fonction protection (P) une fonction CTAL Controll et une fonction Link Controll (LC).

3. Procédé suivant la revendication 1 ou 2,
**caractérisé en ce que** les informations sont transmises par un câblage de ressources de réseau entre le Signalling Gateway (SG) et le Media Gateway Controller (MGC) par une interface H.248.

4. Procédé suivant l'une des revendications 1 à 3,
**caractérisé en ce qu'**au moyen de la terminaison de l'interface TDM (V5.2) dans le Signalling Gateway (SG) on favorise un Single Port Alignment en direction du réseau (An) d'accès.

5. Procédé suivant la revendication 1 et 4,
**caractérisé en ce que** l'on utilise comme interface TDM une interface V.5.2 (V5.2)
